# EUROPÄISCHE PATENTSCHRIFT

(11) **EP 3 283 343 B1**
(45) Veröffentlichungstag und Bekanntmachung des Hinweises auf die Patenterteilung: **23.02.2022**
(21) Anmeldenummer: 16710939.6
(22) Anmeldetag: 08.03.2016
(51) Int. Cl.: B60W 30/08

(54) **OBJEKTVERFOLGUNG VOR UND WÄHREND EINES ZUSAMMENSTOSSES**
OBJECT TRACKING BEFORE AND DURING AN IMPACT
SUIVI D'OBJET AVANT ET PENDANT UNE COLLISION

(30) Priorität: 17.04.2015 DE 102015207016
(43) Veröffentlichungstag der Anmeldung: 21.02.2018
(73) Patentinhaber: Robert Bosch GmbH, 70442 Stuttgart (DE)
(72) Erfinder: EISELE, Sybille, 74394 Hessigheim (DE); WILHELM, Ulf, 71277 Rutesheim (DE)
(86) Internationale Anmeldenummer: PCT/EP2016/054882
(87) Internationale Veröffentlichungsnummer: WO 2016/165880

(56) Entgegenhaltungen:
- EP-A1- 2 572 953
- WO-A1-2006/106009
- DE-A1-102011 087 781
- DE-A1-102012 107 186
- DE-A1-102013 211 651
- DE-A1-102013 215 472
- DE-A1-102014 008 350

## Beschreibung

Die Erfindung betrifft ein Verfahren zur Objektverfolgung vor und während eines Zusammenstoßes eines Fahrzeugs mit einem Objekt.

### Stand der Technik

Ein Kraftfahrzeug ist mit einem Fahrerassistenzsystem oder einer automatischen Steuerung ausgestattet, die einen Fahrer beim Führen des Kraftfahrzeugs unterstützt. Dabei werden insbesondere eine Längs- und eine Quersteuerung des Kraftfahrzeugs einzeln oder gemeinsam unterstützt. Zur Steuerung wird ein Umfeld des Kraftfahrzeugs abgetastet, beispielsweise optisch und/oder per Radar, und Objekte und der Verlauf ihrer Relativbewegungen im Umfeld des Kraftfahrzeugs, also deren Trajektorien, werden aus den abgetasteten Informationen ermittelt. Dieser Vorgang wird auch Tracking genannt. Um die Trajektorien sicher bestimmen zu können, werden die Informationen üblicherweise in festen zeitlichen Abständen erhoben und mittels eines Bewegungsmodells plausibilisiert. Das Bewegungsmodell des Kraftfahrzeugs basiert auf Annahmen, beispielsweise einer maximalen Beschleunigung oder einer maximalen Gierrate, die in einem üblichen Betrieb des Kraftfahrzeugs erwartet werden.

Erleidet das Kraftfahrzeug einen Unfall, insbesondere einen Zusammenstoß, so wird das Fahrerassistenzsystem üblicherweise sofort abgeschaltet. Die während eines Zusammenstoßes auftretenden Beschleunigungen überschreiten die im Bewegungsmodell vorgesehenen Beschleunigungen häufig um ein Vielfaches, sodass die Plausibilisierung der Trajektorien während des Unfalls fehlschlägt. Um nach dem Umfall das Tracking wieder zuverlässig bestimmen zu können, ist üblicherweise die Abtastung des Umfelds des Kraftfahrzeugs in mehreren Abtastschritten erforderlich, wobei eine Plausibilisierung üblicherweise Daten erfordert, die in einem Zeitraum von mehreren Sekunden oder sogar mehreren Minuten erhoben wurden. Die Bestimmung der Trajektorien kann daher auch nach dem Ende des Unfalls nur schlecht oder gar nicht bestimmt werden.

DE 10 2011 087 781 A1 beschreibt ein Verfahren und ein System zur Verminderung von Unfallschäden bei einer Kollision zwischen einem ersten Fahrzeug und einem sich dem ersten Fahrzeug von hinten nähernden zweiten Fahrzeug. Demnach ist das erste Fahrzeug mit einer Kollisionsüberwachungseinrichtung ausgestattet, die erkennt, wenn eine derartige Kollision unvermeidbar ist. Des Weiteren ist das erste Fahrzeug mit einer Steuereinrichtung ausgestattet, die noch vor einer solchen unvermeidbaren Kollision Präventionsmaßnahmen zur Verminderung von Unfallschäden trifft, wie Entkoppeln des Motors, Lösen der Bremsen und Ändern der Lenkrichtung in Abhängigkeit von der Umgebungssituation.

In der DE 10 2014 008 350 A1 wird ein Fahrdynamikregelsystem eines Fahrzeugs beschrieben, das deaktiviert wird, wenn eine Plausibilisierungsprüfung der Sensorsignale, die die Fahrdynamik des Fahrzeugs charakterisieren, negativ ausfällt. Es wird vorgeschlagen, das aus diesem Grunde deaktivierte Fahrdynamikregelsystem sofort wieder zu aktivieren, wenn die Unplausibilität der Sensorsignale auf einen Fahrzeugcrash zurückzuführen ist.

Gegenstand der WO 2006/106009 A1 ist ein Verfahren zum Stabilisieren eines Fahrzeugs nach einer Kollision. Dazu ist das Fahrzeug mit einer Sensorik zum Überwachen und Auswerten des Bewegungszustands des Fahrzeugs ausgestattet, die eine Kollision des Fahrzeugs erkennt. Des Weiteren ist das Fahrzeug mit einer Steuereinrichtung ausgestattet, die die Bewegung des Fahrzeugs im Falle einer Kollision regelt. Dieser Regelung wird ein Sollwert für eine Fahrzeugbewegungsgröße zugrunde gelegt, der zumindest teilweise unabhängig vom Lenkwunsch des Fahrers ist.

Der Erfindung liegt die Aufgabe zugrunde, eine verbesserte Technik zur Berücksichtigung des Umfelds eines Kraftfahrzeuges im Falle einer Erstkollision bereitzustellen. Die Erfindung löst diese Aufgabe mittels eines Verfahrens mit den Merkmalen des unabhängigen Anspruchs. Unteransprüche geben bevorzugte Ausführungsformen wieder.

### Offenbarung der Erfindung

Das erfindungsgemäße Verfahren umfasst die folgenden Schritte:
- Erfassen eines Objekts (125) in einer Umgebung (110) eines Kraftfahrzeugs (100);
- Ermitteln einer Relativbewegung zwischen dem Objekt (125) und dem Kraftfahrzeug (100), in einer ersten Phase, mittels eines ersten Bewegungsmodells des Kraftfahrzeugs (100);
- Erfassen eines Zusammenstoßes des Kraftfahrzeugs (100) mit einem Hindernis (145);
- Ermitteln einer Relativbewegung zwischen dem Objekt (125) und dem Kraftfahrzeug (100), in einer zweiten Phase, während der das Kraftfahrzeug (100) mit dem Hindernis (145) zusammenstößt, mittels eines zweiten Bewegungsmodells des Kraftfahrzeugs (100).

Durch das Anwenden eines anderen Bewegungsmodells während des Zusammenstoßes können Erfassungsdaten des Objekts kontinuierlich verwendet werden, um das Objekt bezüglich des Kraftfahrzeugs zu verfolgen. Die Relativbewegung zwischen dem Objekt und dem Kraftfahrzeug kann so auch im Fall eines Unfalls bestimmt werden. Die Bewegungsmodelle unterscheiden sich üblicherweise durch maximale Geschwindigkeits- und Beschleunigungswerte und/oder maximale Gierraten des Kraftfahrzeugs. Das zweite Bewegungsmodell kann beispielsweise deutlich höhere Beschleunigungswerte als das erste Bewegungsmodell erlauben.

Bevorzugterweise wird das Objekt in der zweiten Phase auch auf der Basis von Erfassungsdaten des Objekts in der ersten Phase verfolgt. Die Verfolgung des Objekts oder seiner Trajektorie bezüglich des Kraftfahrzeugs kann insbesondere auf der Basis von Erfassungsdaten beider Phasen plausibilisiert werden. Das Objekt oder seine Trajektorie können so verlässlicher oder lückenloser verfolgt werden.

In einer weiteren Ausführungsform wird ferner das Ende des Zusammenstoßes bestimmt und in einer dritten Phase das Objekt oder seine Trajektorie bezüglich des Kraftfahrzeugs mittels des ersten Bewegungsmodells des Kraftfahrzeugs weiterverfolgt. Durch das Umschalten auf die übliche Verarbeitung nach dem Ende des Zusammenstoßes können die Erfassungsdaten des Objekts verbessert plausibilisiert werden. Das Objekt kann dadurch besser oder genauer verfolgt werden.

Es ist insbesondere bevorzugt, dass das Objekt in der dritten Phase auch auf der Basis von Erfassungsdaten des Objekts in der zweiten Phase verfolgt wird. Zusätzlich oder alternativ zu den Erfassungsdaten des Objekts in der zweiten Phase können Erfassungsdaten des Objekts in der ersten Phase verwendet werden. Angestrebt wird ein möglichst lückenloses Verwenden zeitlich beabstandeter Erfassungsdaten des Objekts in mehreren Phasen. Die Plausibilisierung der Erfassungsdaten und dadurch die Verfolgung des Objekts oder der Verlauf seiner Relativbewegung bezüglich des Kraftfahrzeugs können dadurch verbessert durchgeführt werden.

Es ist weiter bevorzugt, dass eine Bewegung des Kraftfahrzeugs in der dritten Phase auf der Basis des verfolgten Objekts gesteuert wird. Insbesondere kann die Bewegung des Kraftfahrzeugs so gesteuert werden, dass das Kraftfahrzeug eine Gefahrenzone verlässt, die im Bereich des Zusammenstoßes gilt. Es können auch weitere Steuerungen durchgeführt werden. Beispielsweise kann bestimmt werden, ob ein weiterer Zusammenstoß droht und es können Maßnahmen ergriffen werden, den zweiten Zusammenstoß zu vermeiden oder seine Folgen abzumildern. Beispielsweise kann ein aktives oder passives Sicherheitssystem für Insassen des Kraftfahrzeugs neu aktiviert werden.

Es kann bestimmt werden, aus welcher Richtung das Hindernis mit dem Kraftfahrzeug zusammenstößt, wobei das Objekt in der zweiten Phase nur noch auf der Basis von Sensordaten verfolgt wird, deren zugeordnete Sensoren der Richtung des Zusammenstoßes abgewandt sind. Die zweite Phase ist üblicherweise zu kurz, um eine Plausibilisierung von Sensor- oder Erfassungsdaten durchzuführen. Durch das Verzichten auf Sensordaten von solchen Sensoren, die mit hoher Wahrscheinlichkeit durch den Zusammenstoß in ihrer Funktionsfähigkeit beeinträchtigt worden sind, kann trotzdem in der zweiten Phase eine verbesserte Verfolgung des Objekts durchgeführt werden.

In einer Ausführungsform wird der Zusammenstoß auf der Basis von Daten eines Beschleunigungssensors bestimmt. Der Beschleunigungssensor kann zentral oder dezentral am Kraftfahrzeug angebracht sein. Es können auch mehrere Beschleunigungssensoren verwendet werden.

In einer Variante gehen eine durch den Zusammenstoß bedingte Beschleunigung und eine Beschleunigungsrichtung in die Verfolgung des Objekts in der zweiten Phase ein. Die Verfolgung des Objekts oder seiner Trajektorie können so auch unter den mess- und verarbeitungstechnisch schwierigen Bedingungen während des Zusammenstoßes durchgeführt werden.

In einer weiteren Ausführungsform gehen Daten eines Upfront-Sensors in die Verfolgung des Objekts in der zweiten Phase ein. Upfront-Sensoren sind üblicherweise in Fahrtrichtung vorne am Kraftfahrzeug angebracht und können beispielsweise dazu verwendet werden, den Verlauf und die Schwere eines Frontalaufpralls zu einem frühen Zeitpunkt zu ermitteln. Außerdem kann mittels mehrerer Upfront-Sensoren ein teilüberdeckte Frontalunfall erkannt werden. In der zweiten und dritten Phase können bei Erkennung von teilüberdeckten Frontalunfällen einer oder mehrere Umfelderfassungssensoren im Bereich der betroffenen Teilüberdeckung nicht weiter ausgewertet werden.

Ferner können Daten eines peripheren Sensors, eines Wankratensensors oder eines Gierratensensors in die Verfolgung des Objekts in der zweiten Phase eingehen. Dadurch können charakteristische Daten verwendet werden, die eine Weiterverfolgung der Bewegung des Objekts verbessert erlauben.

Ein Computerprogrammprodukt umfasst Programmcodemittel zur Durchführung des beschriebenen Verfahrens, wenn das Computerprogrammprodukt auf eine Verarbeitungseinrichtung abläuft oder auf einem computerlesbaren Datenträger gespeichert ist.

### Kurzbeschreibung der Figuren

Die Erfindung wird nun mit Bezug auf die beigefügten Figuren genauer beschrieben, in denen:
- Figur 1: eine Vorrichtung an Bord eines Kraftfahrzeugs;
- Figur 2: Phasen eines Zusammenstoßes des Kraftfahrzeugs von Figur 1 mit einem Objekt; und
- Figur 3: ein Ablaufdiagramm eines Verfahrens zur Steuerung des Kraftfahrzeugs von Figur 1
darstellt.

### Genaue Beschreibung von Ausführungsbeispielen

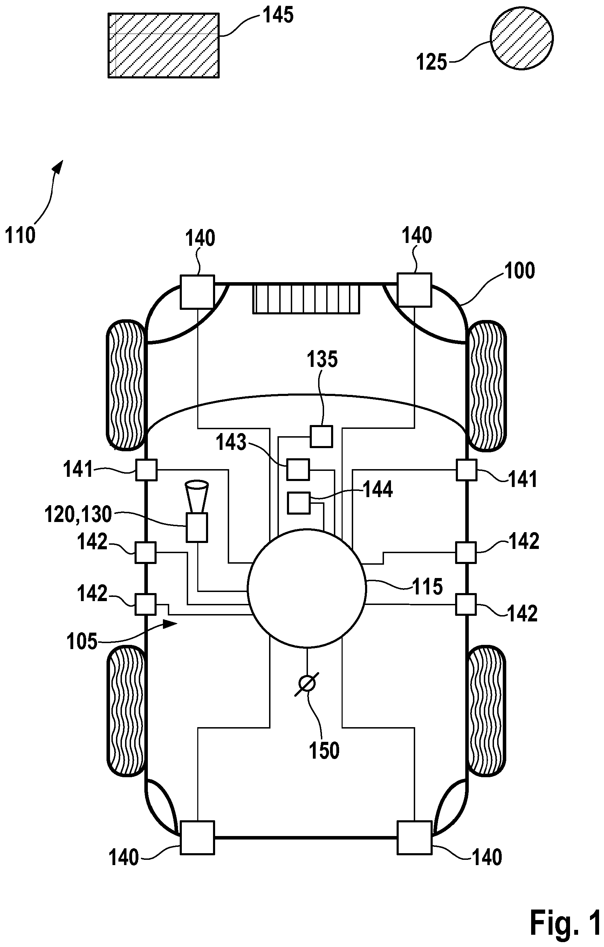

Figur 1 zeigt ein Kraftfahrzeug 100 mit einer Vorrichtung 105. Die Vorrichtung 105 realisiert ein Fahrerassistenzsystem oder eine automatische Fahrzeugsteuerung, wobei die Vorrichtung 105 Komponenten umfassen kann, die auch einem anderen System an Bord des Kraftfahrzeugs 105 zugeordnet sind, beispielsweise einem Einpark- oder Navigationssystem. Insbesondere ist die Vorrichtung 105 dazu eingerichtet, ein Objekt oder den Verlauf seiner Relativbewegung in einer Umgebung bezüglich des Kraftfahrzeugs zu bestimmen.

Die Vorrichtung 105 umfasst eine Verarbeitungseinrichtung 115, die mit wenigstens einem Sensor 120 zur Abtastung eines Objekts 125 in der Umgebung 110 des Kraftfahrzeugs 100 eingerichtet ist. Das Objekt 125 kann ein gegenüber einer Umgebung unbewegliches Objekt sein, beispielsweise ein Straßenpfosten, oder ein bewegliches bzw. sich bewegendes Objekt umfassen, etwa ein anderes Kraftfahrzeug oder einen Fußgänger. Obwohl üblicherweise mehrere Objekte 125 erfasst werden, wird die vorgestellte Technik im Folgenden hauptsächlich Bezug auf nur ein exemplarisches Objekt 125 beschrieben.

Es kann eine Vielzahl von Sensoren 120 verwendet werden, die unterschiedliche Bereiche der Umgebung 110 abtasten können und/oder unterschiedlich aufgebaut sein können. Beispielsweise können einer oder mehrere Kamera- oder Radarsensoren 130 zur Abtastung des Objekts 125 bereitgestellt sein. Diese Sensoren 120 können an einer zentralen Stelle des Kraftfahrzeugs 100 oder im Bereich eines Umrisses des Kraftfahrzeugs 100 angebracht sein.

Zur weiteren Bestimmung des Bewegungsverhaltens des Kraftfahrzeugs 100 können noch weitere Sensoren vorgesehen sein. Dazu können ein Inertialsensor, der eine Beschleunigung in einer oder mehreren Raumrichtungen bestimmt oder ein Drehratensensor für eine oder mehrere Raumrichtungsachsen gehören. Für die zweite Phase können Crashsensordaten zur Bestimmung des Crashbewegungsmodells verwendet werden.

Zur Bestimmung des Zeitpunktes des Zusammenstoßes oder der Crashrichtung können beispielsweise ein zentraler Beschleunigungssensor 135 und/oder einer oder mehrere Upfrontsensoren 140 und/oder einer oder mehrere periphere Sensoren 141, 142 verwendet werden. Sind in einem Fahrzeug wenigstens zwei Upfrontsensoren 140, beispielsweise in der Front oder im Heck des Kraftfahrzeugs 100, verbaut, kann auch eine Teilüberdeckung des Kraftfahrzeugs 100 mit dem Objekt 125 bei der Kollision erkannt werden. Ein seitlicher Zusammenstoß kann mittels eines oder mehrerer peripherer Sensoren und/oder einem zentralen Beschleunigungssensor erkannt werden. Zu den peripheren Sensoren können ein Drucksensor 141, der etwa in einer Fahrzeugtür verbaut sein kann, und/oder ein Beschleunigungssensor, der beispielsweise in einem Türschweller oder in einer B-Säule und/oder in einer C-Säule verbaut sein kann, ausgewertet werden.

Ein Fahrzeugüberschlag kann durch eine zusätzliche Auswertung eines Wankratensensors 143 zur Bestimmung einer Drehrate um die Längsachse des Kraftfahrzeugs 100 (Wankwinkelrate) erkannt werden. Es kann auch ein Gierratensensor 144 vorgesehen sein, um eine Drehgeschwindigkeit des Kraftfahrzeugs 100 um die Hochachse (Gierrate) zu bestimmen. Der Beschleunigungssensor 135, der Wankratensensor 143 und/oder der Gierratensensor 144 liegen bevorzugterweise auf einer Längsachse des Kraftfahrzeugs 100. Mehrere Sensoren 130-144 können auch miteinander integriert ausgeführt sein, beispielsweise in Form eines mehrkanaligen Beschleunigungssensors.

In einer Ausführungsform ist die Verarbeitungseinrichtung 115 dazu eingerichtet, Bewegungsinformationen über das Objekt 125 an einer Schnittstelle 150 bereitzustellen. Ein Fahrerassistenzsystem oder eine automatische Fahrzeugsteuerung können Daten dazu verwenden, das Kraftfahrzeug 100 weiter zu steuern, beispielsweise durch Aktivieren eines Sicherheitssystems oder auch durch Steuerung der Bewegung des Kraftfahrzeugs 100. Insbesondere kann nach dem Zusammenstoß des Kraftfahrzeugs 100 mit einem Hindernis 145 das Kraftfahrzeug 100 dazu angesteuert werden, eine Gefahrenzone in der Umgebung 110 zu verlassen. Diese Gefahrenzone kann das Objekt 125 umfassen. In einer anderen Ausführungsform kann eine Sicherheitszone angesteuert werden, die beispielsweise einen Stand- oder Pannenstreifen einer Straße umfassen kann. Dazu können eine Längs- oder Quersteuerung des Kraftfahrzeugs 100 aktiv beeinflusst werden. So kann ein Folgeunfall mit dem Kraftfahrzeug 100 vermieden werden.

Die Sensoren 120 werden üblicherweise mehrfach in einem vorbestimmten Zeitraum abgetastet, sodass zeitlich die koordinierten Messungen vorliegen. Diese Messungen werden bezüglich eines Bewegungsmodells des Kraftfahrzeugs 100 plausibilisiert. Dieses Bewegungsmodell kann insbesondere maximale Geschwindigkeits- oder Beschleunigungswerte für das Kraftfahrzeug 100 umfassen. Abtastungen, die beispielsweise auf einer Beschleunigung des Kraftfahrzeugs 100 bezüglich des Objekts 125 hinweisen, die die Grenze des Bewegungsmodells übersteigen, können verworfen werden. Es wird vorgeschlagen, einen Zusammenstoß zwischen dem Kraftfahrzeug 100 und dem Hindernis 145 zu bestimmen und während des Zusammenstoßes ein verändertes Bewegungsmodell zu verwenden, um die Sensordaten der Sensoren 120 auszuwerten. Die Relativbewegung des Kraftfahrzeugs 100 bezüglich des Objekts 125 kann so auch während des Zusammenstoßes zutreffend und insbesondere unter Zuhilfenahme von Sensorwerten vor dem Zusammenstoß bestimmt werden.

Das Hindernis 145 kann vor dem Zusammenstoß ebenfalls als Objekt 125 betrachtet und seine Bewegung gegenüber dem Kraftfahrzeug 100 verfolgt werden. In einer Ausführungsform kann die Verfolgung des Hindernisses 145 als Objekt 125 auch nach dem Zusammenstoß aufrechterhalten werden; in einer anderen Ausführungsform hingegen wird nach dem Zusammenstoß das Hindernis 145 nicht weiter als Objekt 125 betrachtet und verfolgt.

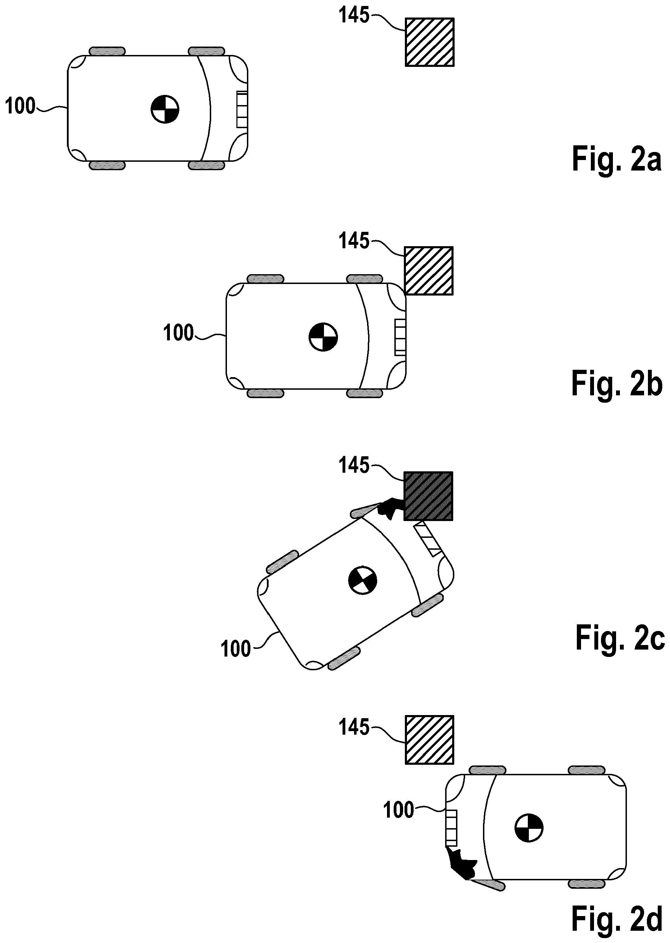

Figur 2 zeigt Phasen eines Zusammenstoßes des Kraftfahrzeugs 100 von Figur 1 mit dem Hindernis 145. Dabei ist exemplarisch ein Frontalzusammenstoß gezeigt, obwohl die hier vorgestellte Technik auch mit einer beliebigen anderen Kollisionsart, beispielsweise einem Heckzusammenstoß, einem versetzten Zusammenstoß oder einem seitlichen Zusammenstoß, verwendet werden kann.

Figur 2a zeigt eine erste Phase, in der das Kraftfahrzeug 100 im üblichen Betrieb bezüglich des Hindernisses 145 in Bewegung ist. Während dieser ersten Phase kann die Bewegung des Kraftfahrzeugs 100, wie oben genauer beschrieben ist, mittels eines ersten Bewegungsmodells bestimmt werden.

Figur 2b zeigt den Übergang von der ersten in eine zweite Phase, während derer das Kraftfahrzeug 100 mit dem Hindernis 145 zusammenstößt. Während der zweiten Phase können beispielsweise Beschleunigungswerte, beispielsweise in Längs- oder Querrichtung oder Hochrichtung oder Drehraten um eine Längs- oder Hochachse des Kraftfahrzeugs 100, die Grenzen des ersten Bewegungsmodells überschreiten. Solche Beschleunigungswerte oder Drehraten können beispielsweise während eines Zusammenpralls, eines Schleuderns, eines Überschlagens oder einer anderen Unfallfolge auftreten.

Figur 2c zeigt das Kraftfahrzeug 100 in der zweiten Phase während des Zusammenstoßes mit dem Hindernis 145. Im gewählten Beispiel wird die Vorwärtsgeschwindigkeit des Kraftfahrzeugs 100 rasch abgebaut, gleichzeitig wird das Kraftfahrzeug 100 stark um die Hochachse beschleunigt. Es ist bevorzugt, während der zweiten Phase die Bewegung des Kraftfahrzeugs 100 bezüglich eines zweiten Bewegungsmodells zu bestimmen, welches insbesondere Beschleunigungswerte des Kraftfahrzeugs 100 zulässt, wie sie während derartiger Manöver auftreten können.

Figur 2d zeigt das Kraftfahrzeug 100 in einer dritten Phase, die sich an die zweite Phase anschließen kann. Der Zusammenstoß mit dem Hindernis 145 ist beendet und die Bewegungsbestimmung kann wieder auf der Basis des ersten Bewegungsmodells durchgeführt werden. Dabei kann eine Steuerung des Kraftfahrzeugs 100 durchgeführt werden, insbesondere, um das Kraftfahrzeug in eine sichere Stellung oder an eine sichere Position zu bewegen. Die Steuerung kann mittels eines Fahrerassistenten oder einer automatischen Fahrzeugsteuerung erfolgen.

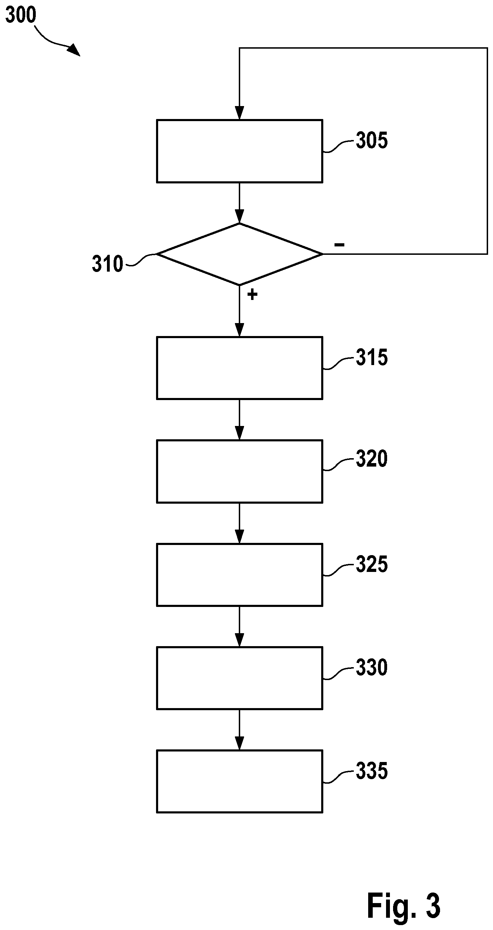

Figur 3 zeigt ein Ablaufdiagramm eines Verfahrens 300 zur Steuerung des Kraftfahrzeugs 100 aus Figur 1. In einem ersten Schritt 305 werden Daten der Sensoren 120 zeitlich beabstandet aufgenommen. Das Hindernis 145 wird in seiner Bewegung bezüglich des Kraftfahrzeugs 100 verfolgt, wobei ein erstes Bewegungsmodell des Kraftfahrzeugs 100 zugrunde gelegt ist. Die festgestellte Bewegung kann einem Fahrerassistenzsystem oder einer automatischen Fahrzeugsteuerung bereitgestellt sein, die insbesondere eine Längs- oder Quersteuerung des Kraftfahrzeugs 100 durchführen. Das Fahrerassistenzsystem oder die automatische Fahrzeugsteuerung kann beispielsweise in die Verarbeitungseinrichtung 115 aus Figur 1 integriert sein.

In einem Schritt 310 wird bestimmt, ob sich ein Unfall bzw. ein Zusammenstoß des Kraftfahrzeugs 100 mit dem Hindernis 145 ergeben hat. Diese Bestimmung kann insbesondere auf der Basis der Sensoren 135 und/oder 140 und/oder 141 und/oder 142 und/oder 143 erfolgen. In einer Verfeinerung kann bestimmt werden, wie schwer der Zusammenstoß ist, um daraus abzuleiten, ob das Kraftfahrzeug 100 nach Beendigung des Zusammenstoßes noch bewegungsfähig bzw. steuerbar bleibt. Wurde kein Zusammenstoß festgestellt, so kann das Verfahren 300 zum Schritt 305 zurückkehren und erneut durchlaufen.

Andernfalls wird in einem Schritt 315 das Bewegungsmodell, das der Verfolgung des Hindernisses 145 bezüglich des Kraftfahrzeugs 100 zugrunde liegt, geändert. Das Bewegungsmodell bzw. die Bewegung zwischen dem Kraftfahrzeug 100 und dem Hindernis 145 können insbesondere auf der Basis einer Richtung, aus der das Hindernis 145 auf das Kraftfahrzeug 100 einwirkt und einer Verzögerung des Kraftfahrzeugs 100 bestimmt werden. Zusätzlich können neben den Crashbeschleunigungswerten noch Drehratensignale ausgewertet werden.

In einem Schritt 320 kann die Verfolgung des Objekts 125 auf Sensordaten solcher Sensoren 120 eingeschränkt werden, die der Richtung des Einwirkens des Hindernisses 145 auf das Kraftfahrzeug 100 abgewandt sind. In der Praxis liegen üblicherweise mehrere Objekte 125 vor, von denen dann nur noch solche weiter verfolgt werden können, die der Richtung des Einwirkens abgewandt sind. So kann vermieden werden, dass Signale eines Sensors 140 zur Plausibilisierung oder Verfolgung verwendet werden, dessen zugeordneter Sensor 140 durch den Zusammenstoß in Mitleidenschaft gezogen worden ist. Außerdem kann so vermieden werden, dass das Hindernis 145, das durch den Zusammenstoß eine schwer zu bestimmende Bewegung vollführen kann, weiter als Objekt 125 verfolgt wird.

In einem Schritt 325 können insbesondere eine Lage und/oder eine Richtung des Kraftfahrzeugs 100 nach dem Zusammenstoß mit dem Hindernis 145 bestimmt werden. Das Verfolgen des Objekts 125 auf der Basis der Daten der Sensoren 120 muss hierfür nicht über mehrere Messzyklen plausibilisiert werden.

In einem Schritt 330 kann das Ende des Zusammenstoßes bestimmt werden, insbesondere auf der Basis von Beschleunigungsdaten, beispielsweise des Beschleunigungssensors 135 und/oder der Upfront-Sensoren 140 und/oder der peripheren Sensoren 141, 142 und/oder des Wankratensensors 143. Mit dem Ende des Zusammenstoßes kann wieder das erste Bewegungsmodell aktiviert werden, um das Tracking zwischen dem Kraftfahrzeug 100 und dem Objekt 125 weiter zu bestimmen.

In einem Schritt 335 kann bestimmt werden, ob sich das Kraftfahrzeug 100 in einer Gefahrenzone befindet oder die Gefahr einer Folgekollision besteht. In diesem Fall kann das Kraftfahrzeug 100 gesteuert werden, um eine sicherere Position in der Umgebung 110 einzunehmen. Dazu können Funktionen des oben erwähnten Fahrerassistenzsystems und/oder der automatischen Fahrzeugsteuerung verwendet werden.

## Patentansprüche

1. Verfahren (100), folgende Schritte umfassend:
- Erfassen eines Objekts (125) in einer Umgebung (110) eines Kraftfahrzeugs (100);
- Ermitteln einer Relativbewegung zwischen dem Objekt (125) und dem Kraftfahrzeug (100), in einer ersten Phase, mittels eines ersten Bewegungsmodells des Kraftfahrzeugs (100);
**gekennzeichnet durch**
- Erfassen eines Zusammenstoßes des Kraftfahrzeugs (100) mit einem Hindernis (145);
- Ermitteln einer Relativbewegung zwischen dem Objekt (125) und dem Kraftfahrzeug (100), in einer zweiten Phase, während der das Kraftfahrzeug (100) mit dem Hindernis (145) zusammenstößt, mittels eines zweiten Bewegungsmodells des Kraftfahrzeugs (100).

2. Verfahren (100) nach Anspruch 1, wobei die Relativbewegung zwischen dem Objekt (125) und dem Kraftfahrzeug (100) in der zweiten Phase auch auf der Basis von Erfassungsdaten des Objekts (125) in der ersten Phase ermittelt wird.

3. Verfahren (100) nach Anspruch 1 oder 2, wobei ferner das Ende des Zusammenstoßes bestimmt und in einer dritten Phase eine Relativbewegung zwischen dem Objekt (125) und dem Kraftfahrzeug (100) mittels des ersten Bewegungsmodells des Kraftfahrzeugs (100) weiter ermittelt wird.

4. Verfahren (100) nach Anspruch 3, wobei die Relativbewegung zwischen dem Objekt (125) und dem Kraftfahrzeug (100) in der dritten Phase auch auf der Basis von Erfassungsdaten des Objekts (125) in der zweiten Phase ermittelt wird.

5. Verfahren (100) nach Anspruch 3 oder 4, wobei in der dritten Phase eine Bewegung des Kraftfahrzeugs (100) so gesteuert wird, dass das Kraftfahrzeug (100) eine Gefahrenzone verlässt, die im Bereich eines Zusammenstoßes mit dem Objekt (125) liegt.

6. Verfahren (100) nach einem der vorangehenden Ansprüche, wobei bestimmt wird, aus welcher Richtung das Hindernis (145) mit dem Kraftfahrzeug (100) zusammenstößt, wobei die Relativbewegung zwischen dem Objekt (125) und dem Kraftfahrzeug (100) in der zweiten Phase nur noch auf der Basis von Sensordaten ermittelt wird, deren zugeordnete Sensoren der Richtung des Zusammenstoßes abgewandt sind.

7. Verfahren (100) nach einem der vorangehenden Ansprüche, wobei der Zusammenstoß auf der Basis von Daten eines Beschleunigungssensors (135) bestimmt wird.

8. Verfahren (100) nach Anspruch 7, wobei eine durch den Zusammenstoß bedingte Beschleunigung und eine Beschleunigungsrichtung in die Ermittlung der Relativbewegung zwischen dem Objekt (125) und dem Kraftfahrzeug (100) in der zweiten Phase eingehen.

9. Verfahren (100) nach einem der vorangehenden Ansprüche, wobei Daten eines Upfront-Sensors (140) in die Ermittlung der Relativbewegung zwischen dem Objekt (125) und dem Kraftfahrzeug (100) in der zweiten Phase eingehen.

10. Verfahren (100) nach einem der vorangehenden Ansprüche, wobei Daten eines peripheren Sensors (141, 142) in die Ermittlung der Relativbewegung zwischen dem Objekt (125) und dem Kraftfahrzeug (100) in der zweiten Phase eingehen.

11. Verfahren (100) nach einem der vorangehenden Ansprüche, wobei Daten eines Wankratensensors (143) in die Ermittlung der Relativbewegung zwischen dem Objekt (125) und dem Kraftfahrzeug (100) in der zweiten Phase eingehen.

12. Verfahren (100) nach einem der vorangehenden Ansprüche, wobei Daten eines Gierratensensors (144) in die Ermittlung der Relativbewegung zwischen dem Objekt (125) und dem Kraftfahrzeug (100) in der zweiten Phase eingehen.

13. Computerprogrammprodukt mit Programmcodemitteln zur Durchführung des Verfahrens (100) nach einem der vorangehenden Ansprüche, wenn das Computerprogrammprodukt auf einer Verarbeitungseinrichtung (115) abläuft oder auf einem computerlesbaren Datenträger gespeichert ist.

## Claims

1. Method (100), comprising the following steps:
- detecting an object (125) in surroundings (110) of a motor vehicle (100);
- ascertaining a relative movement between the object (125) and the motor vehicle (100), in a first phase, by way of a first movement model of the motor vehicle (100);
**characterized by**
- detecting a collision of the motor vehicle (100) with an obstacle (145);
- ascertaining a relative movement between the object (125) and the motor vehicle (100), in a second phase, during which the motor vehicle (100) collides with the obstacle (145), by way of a second movement model of the motor vehicle (100).

2. Method (100) according to Claim 1, wherein the relative movement between the object (125) and the motor vehicle (100) in the second phase is also ascertained on the basis of the detection data of the object (125) in the first phase.

3. Method (100) according to Claim 1 or 2, wherein the end of the collision is also determined and, in a third phase, a relative movement between the object (125) and the motor vehicle (100) is furthermore ascertained by way of the first movement model of the motor vehicle (100).

4. Method (100) according to Claim 3, wherein the relative movement between the object (125) and the motor vehicle (100) in the third phase is also ascertained on the basis of the detection data of the object (125) in the second phase.

5. Method (100) according to Claim 3 or 4, wherein, in the third phase, a movement of the motor vehicle (100) is controlled such that the motor vehicle (100) leaves a danger area that is located in the region of a collision with the object (125).

6. Method (100) according to one of the preceding claims, wherein the direction from which the obstacle (145) collides with the motor vehicle (100) is determined, wherein the relative movement between the object (125) and the motor vehicle (100) in the second phase is ascertained only on the basis of sensor data whose associated sensors face away from the direction of the collision.

7. Method (100) according to one of the preceding claims, wherein the collision is determined on the basis of data from an acceleration sensor (135).

8. Method (100) according to Claim 7, wherein an acceleration brought about by the collision and an acceleration direction are incorporated into the ascertainment of the relative movement between the object (125) and the motor vehicle (100) in the second phase.

9. Method (100) according to one of the preceding claims, wherein data from an up-front sensor (140) are incorporated into the ascertainment of the relative movement between the object (125) and the motor vehicle (100) in the second phase.

10. Method (100) according to one of the preceding claims, wherein data from a peripheral sensor (141, 142) are incorporated into the ascertainment of the relative movement between the object (125) and the motor vehicle (100) in the second phase.

11. Method (100) according to one of the preceding claims, wherein data from a roll rate sensor (143) are incorporated into the ascertainment of the relative movement between the object (125) and the motor vehicle (100) in the second phase.

12. Method (100) according to one of the preceding claims, wherein data from a yaw rate sensor (144) are incorporated into the ascertainment of the relative movement between the object (125) and the motor vehicle (100) in the second phase.

13. Computer program product containing program code means for performing the method (100) according to one of the preceding claims when the computer program product runs on a processing apparatus (115) or is stored on a computer-readable data carrier.

## Revendications

1. Procédé (100), comprenant les étapes suivantes :
- détecter un objet (125) dans l'environnement (110) d'un véhicule automobile (100) ;
- déterminer un mouvement relatif entre l'objet (125) et le véhicule automobile (100), dans une première phase, au moyen d'un premier modèle de mouvement du véhicule automobile (100) ;
**caractérisé par** les étapes suivantes
- détecter une collision du véhicule automobile (100) avec un obstacle (145) ;
- déterminer un mouvement relatif entre l'objet (125) et le véhicule automobile (100), dans une deuxième phase, au cours de laquelle le véhicule automobile (100) entre en collision avec l'obstacle (145), au moyen d'un deuxième modèle de mouvement du véhicule automobile (100).

2. Procédé (100) selon la revendication 1, le mouvement relatif entre l'objet (125) et le véhicule automobile (100) dans la deuxième phase étant également déterminé à partir de données de détection de l'objet (125) dans la première phase.

3. Procédé (100) selon la revendication 1 ou 2, la fin de la collision étant en outre déterminée et, dans une troisième phase, un mouvement relatif entre l'objet (125) et le véhicule automobile (100) étant en outre déterminé au moyen du premier modèle de mouvement du véhicule automobile (100).

4. Procédé (100) selon la revendication 3, le mouvement relatif entre l'objet (125) et le véhicule automobile (100) dans la troisième phase étant également déterminé à partir des données de détection de l'objet (125) dans la deuxième phase.

5. Procédé (100) selon la revendication 3 ou 4, dans la troisième phase, un mouvement du véhicule automobile (100) étant commandé de telle sorte que le véhicule automobile (100) quitte une zone dangereuse qui se trouve dans la région d'une collision avec l'objet (125) .

6. Procédé (100) selon l'une des revendications précédentes, une détermination de la direction à partir de laquelle l'obstacle (145) entre en collision avec le véhicule automobile (100) étant effectuée, le mouvement relatif entre l'objet (125) et le véhicule automobile (100) dans la deuxième phase étant uniquement déterminé sur la base de données de capteur dont les capteurs associés sont dirigés à l'opposé de la direction de la collision.

7. Procédé (100) selon l'une des revendications précédentes, la collision étant déterminée à partir de données d'un capteur d'accélération (135).

8. Procédé (100) selon la revendication 7, une accélération provoquée par la collision et une direction d'accélération étant incluses dans la détermination du mouvement relatif entre l'objet (125) et le véhicule automobile (100) dans la deuxième phase.

9. Procédé (100) selon l'une des revendications précédentes, les données d'un capteur frontal (140) étant incluses dans la détermination du mouvement relatif entre l'objet (125) et le véhicule automobile (100) dans la deuxième phase.

10. Procédé (100) selon l'une des revendications précédentes, des données d'un capteur périphérique (141, 142) étant incluses dans la détermination du mouvement relatif entre l'objet (125) et le véhicule automobile (100) dans la deuxième phase.

11. Procédé (100) selon l'une des revendications précédentes, des données d'un capteur de taux de roulis (143) étant incluses dans la détermination du mouvement relatif entre l'objet (125) et le véhicule automobile (100) dans la deuxième phase.

12. Procédé (100) selon l'une des revendications précédentes, des données d'un capteur de taux de lacet (144) étant incluses dans la détermination du mouvement relatif entre l'objet (125) et le véhicule automobile (100) dans la deuxième phase.

13. Progiciel comprenant des moyens formant code de programme pour mettre en œuvre le procédé (100) selon l'une des revendications précédentes, lorsque le progiciel est exécuté sur un dispositif de traitement (115) ou mémorisé sur un support de données lisible par ordinateur.
